# EUROPÄISCHE PATENTANMELDUNG

(11) **EP 1 160 116 A2**
(43) Veröffentlichungstag der Anmeldung: **05.12.2001**
(21) Anmeldenummer: 01111900.5
(22) Anmeldetag: 17.05.2001
(51) Int. Cl.: B60K 37/02

(54) **Kombiinstrument für ein Kraftfahrzeug**

(30) Priorität: 30.05.2000 DE 10026892
(71) Anmelder: Mannesmann VDO Aktiengesellschaft, 60388 Frankfurt am Main (DE)
(72) Erfinder: Adams, Jürgen, Dipl.-Ing. (FH), 78052 Villingen-Schwenningen (DE)

(57) **Zusammenfassung**

Für ein Kombiinstrument für ein Kraftfahrzeug, insbesondere für ein Nutzfahrzeug oder einen Bus, mit einem LC-Display (1) wird vorgeschlagen, daß eine Lichtleitplatte (4) vorgesehen ist,
- in die Umgebungslicht von innerhalb oder von außerhalb des Kraftfahrzeugs eingekoppelt wird,
- in der das eingekoppelte Umgebungslicht durch Totalreflexion an die vom Betrachter abgewandte Seite des LC-Displays (1) geführt wird und
- die an der vom Betrachter abgewandten Seite des LC-Displays (1) zur dortigen Auskopplung des Umgebungslichts aus der Lichtleitplatte (4) und zur Einkopplung des Umgebungslichts in das LC-Display (1) eine Beschichtung (11) oder eine Struktur (13) aufweist.

Durch diese Maßnahme wird für das LC-Display (1) eine Hinterleuchtung bewirkt, die zu einer deutlichen Kontrastanhebung für auf dem LC-Display (1) angezeigte Informationen führt.

## Beschreibung

Die vorliegende Erfindung betrifft ein Kombiinstrument für ein Kraftfahrzeug, insbesondere für ein Nutzfahrzeug oder einen Bus, mit einem LC-Display.

Kombiinstrumente sind in ihrem Aufbau durch vielfältigen Einsatz in Kraftfahrzeugen bekannt. Sie enthalten in einem einzigen Gehäuse zumeist mehrere, auf einer Trägerplatte aufgebrachte Anzeigevorrichtungen und informieren den Fahrer über diverse Betriebszustände des Kraftfahrzeugs. Dabei ist die Trägerplatte häufig als elektrische Leiterplatte ausgebildet. Neben analogen Anzeigevorrichtungen findet sich in einem Kombiinstrument immer öfter auch ein LC-Display, d.h. eine Flüssigkristallanzeige. In einem Nutzfahrzeug oder in einem Bus wird das zumeist flach gestaltete Kombiinstrument in der Armaturentafel unter einem gegenüber der Horizontalen abgeneigten Winkel von typischerweise 20° bis 50° verbaut, was den Vorteil hat, daß großflächige und damit besonders übersichtliche Anordnungen von Instrumenten und elektronischen Anzeigen, so auch einem LC-Display, möglich sind.

Im Gegensatz zu den üblichen Einbauverhältnissen eines Kombiinstruments in einem Personenkraftwagen, in denen das Kombiinstrument zumeist nahezu vertikal verbaut ist, ist in einem Nutzfahrzeug oder in einem Bus ein Blendschutz, beispielsweise in Form einer das Kombiinstrument abschirmenden Hutze, im Regelfall nicht vorgesehen, so daß in einem Nutzfahrzeug oder in einem Bus Umgebungslicht direkt auf die Front des Kombiinstruments einfallen kann. Intensives Licht, wie das Sonnenlicht, kann aber dann die Ablesbarkeit von Anzeigen auf dem LC-Display in erheblicher Weise beeinträchtigen. Die Beeinträchtigung der Ablesbarkeit von Anzeigen auf dem LC-Display ergibt sich deshalb, weil ein ungehinderter Einfall von hellem Störlicht auf das LC-Display zwangsläufig den Kontrast von Informationdarstellungen auf dem LC-Display im Verhältnis zur Umgebungshelligkeit verringert.

Es ist nun die Aufgabe der vorliegenden Erfindung ein Kombiinstrument für ein Kraftfahrzeug, insbesondere für ein Nutzfahrzeug oder einen Bus, mit einem LC-Display aufzuzeigen, bei dem trotz der üblichen Einbauverhältnisse für ein Kombiinstrument in einem Nutzfahrzeug oder in einem Bus und den damit einhergehenden Störlichteinflüssen die Ablesbarkeit von auf dem LC-Display dargestellten Informationen durch eine Kontrastanhebung verbessert wird.

Die Aufgabe wird durch die Merkmale des ersten Anspruchs gelöst. Die abhängigen Ansprüche zeigen vorteilhafte Ausgestaltungen und Weiterbildungen der gefundenen Lösung. Die Lösung zeichnet sich insbesondere dadurch aus, daß im Kombiinstrument eine Lichtleitplatte vorgesehen ist,
- in die Umgebungslicht von innerhalb oder von außerhalb des Kraftfahrzeugs eingekoppelt wird,
- in der das eingekoppelte Umgebungslicht durch Totalreflexion an die vom Betrachter abgewandte Seite des LC-Displays geführt wird und
- die an der vom Betrachter abgewandten Seite des LC-Displays zur dortigen Auskopplung des Umgebungslichts aus der Lichtleitplatte und zur Einkopplung des Umgebungslichts in das LC-Display eine Beschichtung oder eine Struktur aufweist.

Weitere Lösungsmerkmale sind,
- daß das LC-Display transmissiv ausgebildet ist,
- daß die Lichtleitplatte aus Kunststoff besteht,
- daß die Beschichtung der Lichtleitplatte weiß und hochreflektiv ausgebildet ist,
- daß im Kombiinstrument auch analoge Anzeigevorrichtungen mit Skalen vorgesehen sind und daß die Lichtleitplatte im Bereich der Skalen für deren Teilungen und/oder Teilungsangaben ebenso eine zur selektiven Lichtauskopplung geeignete Struktur oder Beschichtung aufweist wie im Bereich der Anzeigefläche des LC-Displays,
- daß ein Photosensor vorgesehen ist, der ohne unmittelbare Beeinflussung durch das Umgebungslicht einzig die Intensität des in der Lichtleitplatte vorhandenen Lichts erfaßt, daß des weiteren Leuchtdioden vorgesehen sind, die ihr Licht in die Lichtleitplatte einkoppeln und daß die Intensität des von den Leuchtdioden emittierten Lichts in Abhängigkeit von dem von dem Photosensor erfaßten Licht gesteuert wird,
- daß die in Verbindung mit dem Photosensor eingesetzten Leuchtdioden für einen möglichst farbneutralen Übergang vom Tagbetrieb zum Nachtbetrieb weißes Licht emittieren,
- daß die Lichtleitplatte aus dem Gehäuse des Kombiinstruments hinaus bis zur Windschutzscheibe des Kraftfahrzeugs geführt ist, wodurch Licht, das durch die Windschutzscheibe in das Kraftfahrzeug einfällt, möglichst ungehindert in die Lichtleitplatte eingekoppelt werden kann,
- daß die aus dem Gehäuse des Kombiinstruments hinausgeführte Lichtleitplatte in der Armaturentafel des Kraftfahrzeugs eingebettet ist und die Armaturentafel im Bereich vor der Windschutzscheibe eine Öffnung für die Einkopplung des Umgebungslichts in die Lichtleitplatte besitzt,
- daß die Lichtleitplatte im Bereich vor der Windschutzscheibe mit geeigneten Strukturen oder einer den Brechungsindex herabsetzenden Beschichtung versehen ist, die die Einkopplung des Umgebungslichts in die Lichtleitplatte unterstützen.

Die erfindungsgemäße Kontrastanhebung hat den Vorteil, ohne den Einsatz von zusätzlichen aktiven elektrischen Lichtquellen auszukommen. Ein mit den vorstehenden Merkmalen ausgestattetes Kombiinstrument hat a) keinen höheren elektrischen Energiebedarf, b) erfordert nicht eine größere Anzahl von elektrischen Bauteilen, c) produziert keine bei elektrischen Lichtquellen unvermeidbare Abwärme und d) ist kostengünstig realisierbar, weil die Lichtleitplatte in nahezu beliebiger Gestalt als Spritzgußteil gefertigt werden kann. Der vorgeschlagene Lösungsansatz beruht darauf, daß der an sich störende Lichteinfall für eine Hinterleuchtung des LC-Displays genutzt wird. Dadurch, daß der einfallende Lichtstrom gesammelt, hinter das LC-Display geleitet und dort zum konzentrierten Austritt veranlaßt wird, läßt sich der Kontrast von Darstellungen auf dem LC-Display gerade dann erhöhen, wenn eine Kontrastanhebung am dringendsten benötigt wird, nämlich bei intensivem Umgebungslicht, wie beispielsweise am Tag beim Einfall von hellem Sonnenlicht.

Anhand von 3 Figuren soll die vorliegende Erfindung nun noch näher erläutert werden. Dabei zeigen beispielhaft jeweils in einer auf das Wesentliche reduzierten Darstellung
- Figur 1: die Front eines gattungsgemäßen Kombiinstruments,
- Figur 2: den Aufbau eines solchen Kombiinstruments und
- Figur 3: eine Ausgestaltungs- und Anordnungsvariante der Lichtleitplatte für das vorgeschlagene Kombiinstrument.

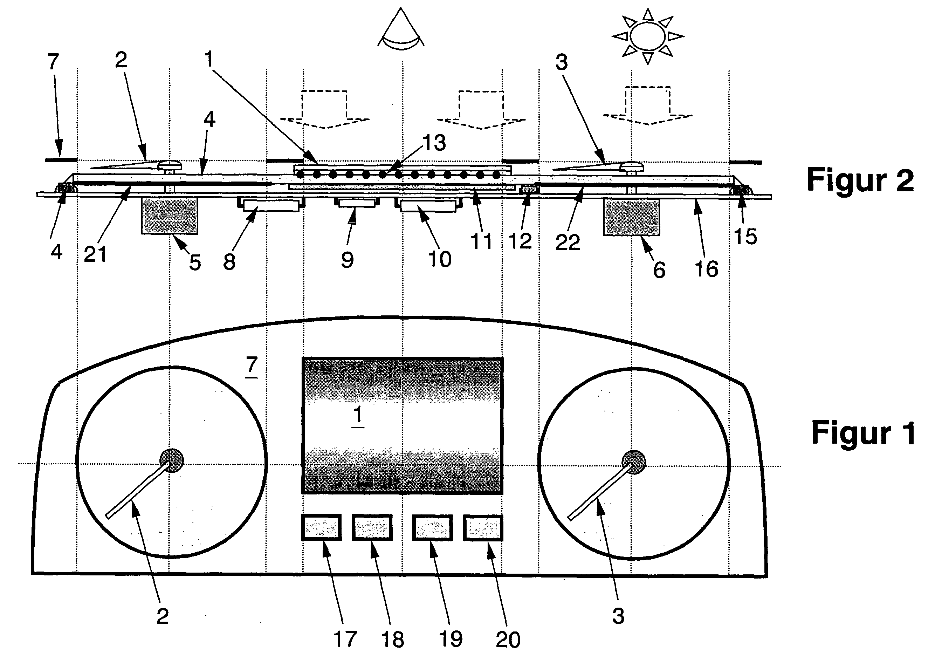

Die **Figuren 1 und 2** werden hier zusammenhängend erläutert, da sie dasselbe Kombiinstrument zeigen. Es ist ein Kombiinstrument dargestellt mit einem LC-Display 1 und zwei analogen Anzeigevorrichtungen mit den Zeigern 2 und 3, wobei die Achsen der Zeiger 2 und 3 von Stellmotoren 5 und 6 angetrieben werden. Die Stellmotoren 5 und 6 und einige andere elektrische und elektronische Bauelemente 8, 9 und 10, die zum Betreiben der Anzeigen einschließlich des LC-Displays 1 erforderlich sind, sind vorzugsweise auf der vom Betrachter abgewandten Seite einer elektrischen Leiterplatte 16 aufgebracht. Der flach geschichtete Aufbau des Kombiinstruments weist auf der dem Betrachter zugewandten Seite der Leiterplatte 16 eine Lichtleitplatte 4 auf, die in dem gezeigten Aufbau des Kombiinstruments ihrerseits wiederum von einer opaken Maske 7 abgedeckt wird. In dem dargestellten Beispiel erstrecken sich die Lichtleitplatte 4 und die Maske 7 über die gesamte Front des Kombiinstruments. Die durchaus großflächig gestaltete Lichtleitplatte 4 kann beispielsweise als Spritzgußteil aus einem vorzugsweise transparenten Kunststoff gefertigt sein und eine Stärke von etwa 3 mm besitzen. Die auch Designzwecken dienende Maske 7 kann zum Betrachter hin eine Instrumentenoberfläche des Kombiinstruments bilden, sofern nicht eine weitere, hier nicht dargestellte transparente Abdeckung für die Front des Kombiinstruments vorgesehen ist. Das LC-Display 1, das vorzugsweise transmissiv ausgebildet ist, ist hier mitten zwischen den beiden analogen Anzeigevorrichtungen sowie zwischen der Lichtleitplatte 4 und der Maske 7 angeordnet. Um Licht in die Lichtleitplatte 4 einzukoppeln, ist die Maske 7 im Bereich der analogen Anzeigevorrichtungen durchbrochen oder dort zumindest lichtdurchlässig, so daß gerade in diesem Bereich Umgebungslicht möglichst umfassend und ungehindert auf die Lichtleitplatte 4 einfallen kann. Selbstverständlich ist die Maske 7 auch im Bereich der Anzeigefläche des LC-Displays 1 durchbrochen bzw. durchsichtig, um dort die Anzeige des LC-Displays 1 nicht zu behindern. Die Lichtleitplatte 4 unterlegt den Bereich der Anzeigefläche des LC-Displays 1 vorzugsweise ganzflächig und ist in diesem Bereich mit einer an der Oberseite der Lichtleitplatte 4 angebrachten oder aufgebrachten Struktur 13 zum Auskoppeln des in der Lichtleitplatte 4 geführten Lichts versehen. Das im Bereich der analogen Anzeigevorrichtungen in die Lichtleitplatte 4 eingekoppelte Licht wird durch Totalreflexion an den Grenzflächen der Lichtleitplatte 4 zum Bereich der Anzeigefläche des LC-Displays 1 geführt. Die Auskopplung des Lichts aus der Lichtleitplatte 4 und die konzentrierte und möglichst gleichmäßig über den Bereich der Anzeigefläche des LC-Displays 1 verteilte Einkopplung des in der Lichtleitplatte 4 geführten Lichts in das LC-Display 1 wird in dem Bereich der Anzeigefläche des LC-Displays 1 durch eine dort an der Unterseite der Lichtleitplatte 4 angebrachte oder aufgebrachte weiße, hoch reflektive Beschichtung 11 unterstützt. Diese Beschichtung 11, die auch als eine an der genannten Stelle durchgeführte Konditionierung der Lichtleitplatte 4 bezeichnet werden kann, wirkt einerseits als Spiegel für das von der Frontseite direkt in das LC-Display 1 einfallende Licht und darüber hinaus unterstützt sie in Verbindung mit der sie räumlich weitgehend überdeckenden Struktur 13 die Auskopplung des von der Lichtleitplatte 4 geführten Lichts, was beides eine Hinterleuchtung des LC-Displays 1 bewirkt. Bei Tageslicht läßt sich auf diese Weise für die Darstellung von Informationen auf der Anzeigefläche des LC-Displays 1 ohne Zuhilfenahme von aktiven elektrischen Lichtquellen ein Kontrastverhältnis von etwa 5:1 erreichen.

Vorzugsweise an der Unterseite der Lichtleitplatte 4 sind im Bereich der analogen Anzeigevorrichtungen Skalen 21 und 22 angebracht. Diese Skalen 21 und 22 können beispielsweise durch eine bedruckte Folie oder durch eine Bedruckung auf der Lichtleitplatte 4 realisiert sein. Auch kann vorgesehen sein, daß die Lichtleitplatte 4 im Bereich der Skalen 21 und 22 für deren Teilungen und/oder Teilungsangaben ebenso wie im Bereich der Anzeigefläche des LC-Displays 1 konditioniert ist bzw. dort eine zur Lichtauskopplung geeignete Struktur und Beschichtung aufweist. Die Achsen der Zeiger 2 und 3 der analogen Anzeigevorrichtungen durchstoßen von den Stellmotoren 5 und 6 kommend die Lichtleitplatte 4, so daß der Zeigerausschlag oberhalb der Lichtleitplatte 4 erfolgt. Eine Ausleuchtung der Zeiger 2 und 3 kann durch eine Auskopplung von Licht aus der Lichtleitplatte 4 konzentrisch in der Nähe der Zeigerachsen erfolgen, wobei der Lichtfluß von der Lichtleitplatte 4 in die Zeigerachsen mit an sich bekannten und in den Figuren 1 und 2 nicht dargestellten Prismenstrukturen durchgeführt werden kann.

Die Figur 1 zeigt auch noch üblicherweise zu einem Kombiinstrument gehörende Kontrolleuchten 17,18,19 und 20, welche in konventioneller Technik realisiert sein und sich in entsprechenden Aussparungen der Lichtleitplatte 4 befinden können, wobei für diese Kontrolleuchten 17,18,19 und 20 zur Vermeidung einer unerwünschten Lichtauskopplung zur Lichtleitplatte 4 hin abschirmende Lichtschächte vorgesehen sein können. In der Figur 2 sind überdies durch Symbole die Lichtquelle für das auf die Frontseite des Kombiinstruments einfallende Licht, für den auf das Kombiinstrument gerichteten Lichtstrom sowie für den Betrachter dargestellt. Dünne, gepunktet dargestellte Hilfslinien in und zwischen den Figuren 1 und 2 sollen die Zuordnung von Bauteilen und ein Verständnis über deren Anordnung erleichtern.

In der Figur 2 sind auch Maßnahmen aufgezeigt, die einen Betrieb des vorgeschlagenen Kombiinstruments während der Dämmerung und insbesondere bei Nacht ermöglichen, wenn also das von der Lichtleitplatte 4 einfangbare Umgebungslicht für eine angemessene Hinterleuchtung des LC-Displays 1 und damit zur Kontrastanhebung für die darauf dargestellte Information allein nicht mehr ausreicht. In räumlicher Nähe zur Beschichtung 11, also der Stelle, an der das in der Lichtleitplatte 4 geführte Licht in das LC-Display 1 übertragen wird, ist vorzugsweise auf der Leiterplatte 16 ein Photosensor 12 angeordnet. Mit diesem Photosensor 12, der aus einem Licht gesteuerten Widerstand (LDR) bestehen kann, werden in Verbindung mit einer geeigneten, beispielsweise in den Bauelementen 8, 9 oder 10 implementierten Steuereinrichtung Leuchtdioden 4 und 15 gesteuert, die ebenfalls vorzugsweise auf der Leiterplatte 16 angeordnet sind und die bei Bedarf, eben zum Beispiel während der Dämmerung oder des nachts, ihr Licht zum Beispiel über geeignete Prismenanordnungen - wie in der Figur 2 an den beiden Enden der Lichtleitplatte 4 angedeutet - in die Lichtleitplatte 4 einkoppeln. Im Gegensatz zu gebräuchlichen Beleuchtungssteuerungen für herkömmliche Kombiinstrumente, die mit einem Photosensor unmittelbar und direkt das Umgebungslicht erfassen, hat die hier vorgeschlagene Anordnung für den Photosensor 12 den Vorteil, daß das gesamte von der Lichtleitplatte 4 aufgenommene Licht für die Beleuchtungssteuerung ausgewertet wird. Handelsübliche Photosensoren verfügen in der Regel über einen schmalen Erfassungswinkel und können aufgrund ihrer mehr oder weniger nur punktuellen Lichterfassung unter Umständen von einer einzelnen, in der Fahrzeugkabine vorhandenen Lichtquelle irritiert werden, was im Ergebnis zu einer nicht optimalen Beleuchtung des LC-Displays 1 führt. Da die Lichtleitplatte 4 hingegen das Umgebungslicht über eine relativ große Fläche aufnimmt, wird beispielsweise auch von hellen, reflektierenden Inneneinrichtungen und Verkleidungsteilen der Fahrzeugkabine oder von der Kleidung des Fahrers herrührendes Streulicht erfaßt. Aufgrund der hier vorgeschlagenen Anordnung für den Photosensor 12 nimmt dieser die von der Lichtleitplatte 4 erfaßte Lichtstärke auf, wodurch eine angemessenere Beleuchtung für das LC-Display 1 möglich wird. Diese Anordnung ist daher gut geeignet, trotz der Verwendung von nur einem einzigen handelsüblichen Photosensor 12 dennoch einen Mittelwert von den vor dem Kombiinstrument vorhandenen Lichtverhältnissen zu erfassen. Das von den Leuchtdioden 4 und 15 in die Lichtleitplatte 4 eingekoppelte Licht wird ebenso wie das von der Lichtleitplatte 4 erfaßte Umgebungslicht im Bereich der Anzeigefläche des LC-Displays 1 durch die an dieser Stelle konditionierte Lichtleitplatte 4 bzw. die dortige Struktur 13 im Zusammenwirken mit der dortigen Beschichtung 11 an der Unterseite der Lichtleitplatte 4 zum Zweck der Hinterleuchtung des LC-Displays 1 ausgekoppelt. Gleiches gilt, wenn auf diese Weise auch die Skalen, deren Teilungen oder Teilungsangaben beleuchtet werden sollen. Es empfiehlt sich, für einen möglichst farbneutralen Übergang vom Tagbetrieb zum Nachtbetrieb weißes Licht emittierende Leuchtdioden 4 und 15 einzusetzen, so daß während der Dämmerung oder bei Lichtverhältnissen mit schwankender Intensität ein Farbumschlag für die Hinterleuchtung des LC-Displays 1 vermieden wird, was sonst gegebenenfalls zur Irritation des Fahrers führen könnte. Falls gewünscht, können für farbige Darstellungen zum Beispiel im Bereich der Skalen 21 und 22 oder der Zeiger 2 und 3 weitere, entsprechend farbige Leuchtdioden vorgesehen werden, die ihr Licht bedarfsweise beimischen, die aber unabhängig vom Photosensor 12 angesteuert werden.

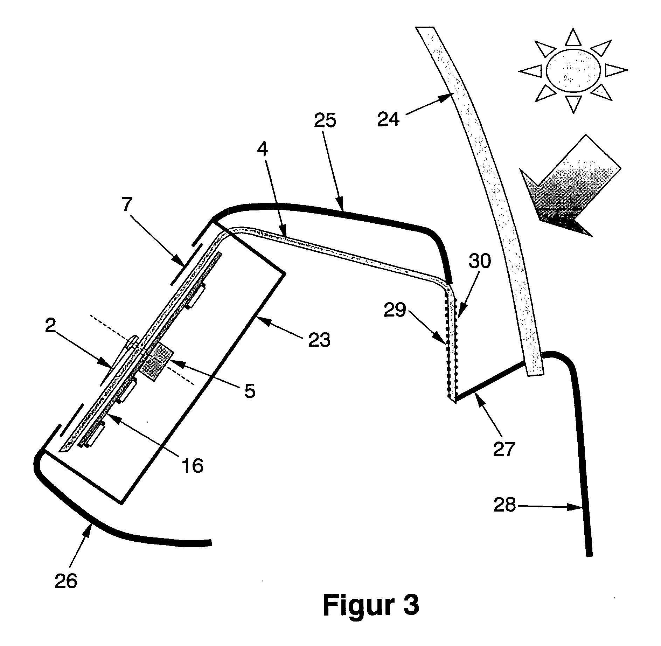

Eine weitere Ausgestaltung der Erfindung zeigt die **Figur 3**. In dem dort gezeigten Beispiel ist die Lichtleitplatte 4 aus dem Gehäuse 23 des Kombiinstruments hinaus bis zur Windschutzscheibe 24 des Kraftfahrzeugs geführt, um Licht, das durch die Windschutzscheibe 24 in das Kraftfahrzeug einfällt, möglichst ungehindert in die Lichtleitplatte 4 einzukoppeln. Das Kombiinstrument ist in der Armaturentafel und die Armaturentafel ihrerseits in der Kabine des Kraftfahrzeugs eingefaßt, was in der Figur 3 durch die Begrenzungslinien 25, 26, 27 und 28 angedeutet ist. Die Lichtleitplatte 4 ist gemäß dieser Ausgestaltung der Erfindung in der Armaturentafel als ein Lichtleitsystem verlegt. Die Armaturentafel besitzt im Bereich vor der Windschutzscheibe 24 eine Öffnung, um dort die in die Armaturentafel eingebettete Lichtleitplatte 4 freizulegen. Um einen möglichst großen Lichteinfang in die Lichtleitplatte 4 zu erreichen, ist diese auf der Fahrzeuginnenseite vor der Windschutzscheibe 24 großflächig ausgebildet und kann sich zum Beispiel über die gesamte Breite der Armaturentafel oder zumindest über die Breite des Kombiinstruments erstrecken. Die Einkopplung des Umgebungslichts in die Lichtleitplatte 4 kann durch an ihr im Bereich vor der Windschutzscheibe 24 angebrachte geeignete Strukturen 29 oder einer den Brechungsindex herabsetzenden Beschichtung 30 unterstützt werden. Die Lichtleitung in der Lichtleitplatte 4 erfolgt wiederum durch Totalreflexion, so daß das eingekoppelte Licht bis zum LC-Display 1 im Kombiinstrument geführt und dann dort in der bereits beschriebenen Weise zur Hinterleuchtung des LC-Displays 1 ausgekoppelt wird. Bei diesem Ausführungsbeispiel der Erfindung ist darauf zu achten, daß die im Bereich vor der Windschutzscheibe 24 zur Lichteinkopplung ergriffenen Maßnahmen nicht zu unerwünschten Spiegelungen in der Windschutzscheibe 24 führen. Um eine Montage der aus dem Kombiinstrument hinausführenden Lichtleitplatte 4 zu erleichtern, kann die Lichtleitplatte 4 mehrstückig ausgestaltet sein. In der in der Figur 3 gezeigten Schnittdarstellung des Kombiinstruments wird auch wie zuvor in den Figuren 1 und 2 auf eine analoge Anzeigevorrichtung mit einem Zeiger 2, den die Achse des Zeigers 2 antreibenden Stellmotor 5, eine das Kombiinstrument frontseitig abdeckende Maske 7 sowie die Leiterplatte 16 samt einigen darauf montierten Bauelementen Bezug genommen.

## Patentansprüche

1. Kombiinstrument für ein Kraftfahrzeug, insbesondere für ein Nutzfahrzeug oder einen Bus, mit einem LC-Display (1),
**dadurch gekennzeichnet,**
1.1. **daß** eine Lichtleitplatte (4) vorgesehen ist,
1.1.1. in die Umgebungslicht von innerhalb oder von außerhalb des Kraftfahrzeugs eingekoppelt wird,
1.1.2. in der das eingekoppelte Umgebungslicht durch Totalreflexion an die vom Betrachter abgewandte Seite des LC-Displays (1) geführt wird und
1.1.3. die an der vom Betrachter abgewandten Seite des LC-Displays (1) zur dortigen Auskopplung des Umgebungslichts aus der Lichtleitplatte (4) und zur Einkopplung des Umgebungslichts in das LC-Display (1) eine Beschichtung (11) oder eine Struktur (13) aufweist.

2. Kombiinstrument nach Anspruch 1,
**dadurch gekennzeichnet,**
**daß** das LC-Display (1) transmissiv ausgebildet ist.

3. Kombiinstrument nach einem der vorangegangenen Ansprüche,
**dadurch gekennzeichnet,**
**daß** die Lichtleitplatte (4) aus Kunststoff besteht.

4. Kombiinstrument nach einem der vorangegangenen Ansprüche,
**dadurch gekennzeichnet,**
**daß** die Beschichtung (11) der Lichtleitplatte (4) weiß und hochreflektiv ausgebildet ist.

5. Kombiinstrument nach einem der vorangegangenen Ansprüche,
**dadurch gekennzeichnet,**
**daß** auch analoge Anzeigevorrichtungen mit Skalen (21, 22) vorgesehen sind und daß die Lichtleitplatte (4) im Bereich der Skalen (21, 22) für deren Teilungen oder Teilungsangaben ebenso eine zur selektiven Lichtauskopplung geeignete Struktur (13) oder Beschichtung (11) aufweist wie im Bereich der Anzeigefläche des LC-Displays (1).

6. Kombiinstrument nach einem der vorangegangenen Ansprüche,
**dadurch gekennzeichnet,**
6.1. daß ein Photosensor (12) vorgesehen ist, der ohne unmittelbare Beeinflussung durch das Umgebungslicht die Intensität des in der Lichtleitplatte (4) vorhandenen Lichts erfaßt,
6.2. daß Leuchtdioden (4, 15) vorgesehen sind, die ihr Licht in die Lichtleitplatte (4) einkoppeln und
6.3. daß die Intensität des von den Leuchtdioden (4, 15) emittierten Lichts in Abhängigkeit von dem von dem Photosensor (12) erfaßten Licht gesteuert wird.

7. Kombiinstrument nach Anspruch 6,
**dadurch gekennzeichnet,**
**daß** die Leuchtdioden (4, 15) für einen farbneutralen Übergang vom Tagbetrieb zum Nachtbetrieb weißes Licht emittieren.

8. Kombiinstrument nach einem der vorangegangenen Ansprüche,
**dadurch gekennzeichnet,**
**daß** die Lichtleitplatte (4) aus dem Gehäuse (23) des Kombiinstruments hinaus bis zur Windschutzscheibe (24) des Kraftfahrzeugs geführt ist, um Licht, das durch die Windschutzscheibe (24) in das Kraftfahrzeug einfällt, in die Lichtleitplatte (4) einzukoppeln.

9. Kombiinstrument nach Anspruch 8,
**dadurch gekennzeichnet,**
**daß** die aus dem Gehäuse (23) des Kombiinstruments hinausgeführte Lichtleitplatte (4) in der Armaturentafel des Kraftfahrzeugs eingebettet ist und die Armaturentafel im Bereich vor der Windschutzscheibe (24) eine Öffnung für die Einkopplung des Umgebungslichts in die Lichtleitplatte (4) besitzt.

10. Kombiinstrument nach einem der Ansprüche 7 oder 8,
**dadurch gekennzeichnet,**
**daß** die Lichtleitplatte (4) im Bereich vor der Windschutzscheibe (24) mit geeigneten Strukturen (29) oder einer den Brechungsindex herabsetzenden Beschichtung (30) versehen ist, die die Einkopplung des Umgebungslichts in die Lichtleitplatte (4) unterstützen.
